# EUROPÄISCHE PATENTSCHRIFT

(11) **EP 1 191 754 B1**
(45) Veröffentlichungstag und Bekanntmachung des Hinweises auf die Patenterteilung: **26.10.2005**
(21) Anmeldenummer: 01119269.7
(22) Anmeldetag: 09.08.2001
(51) Int. Cl.: H04L 12/66, H04M 7/00, H04L 12/64

(54) **Verfahren zum Steuern einer Datenumsetzung beim Übergang einer Verbindung zwischen einem paketvermittelten und einem leitungsvermittelten Kommunikationsnetz**
Method for controlling a gateway in a network connection between packet-switched and circuit-switched lines
Méthode pour contrôler une passerelle dans une connexion de réseau entre une ligne à commutation de paquet et une ligne à commutation de circuit

(30) Priorität: 26.09.2000 DE 10047658
(43) Veröffentlichungstag der Anmeldung: 27.03.2002
(73) Patentinhaber: SIEMENS AKTIENGESELLSCHAFT, 80333 München (DE)
(72) Erfinder: Windecker, Rainer, 81739 München (DE)

(56) Entgegenhaltungen:
- HAMDI M ET AL: "VOICE SERVICE INTERWORKING FOR PSTN AND IP NETWORKS" IEEE COMMUNICATIONS MAGAZINE, IEEE SERVICE CENTER. PISCATAWAY, N.J, US, Bd. 37, Nr. 5, Mai 1999 (1999-05), Seiten 104-111, XP000830888 ISSN: 0163-6804
- ANQUETIL L-P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION, ALCATEL. BRUSSELS, BE, 1. April 1999 (1999-04-01), Seiten 151-157, XP000830045 ISSN: 0013-4252
- HOSHI T ET AL: "VOICE STREAM MULTIPLEXING BETWEEN IP TELEPHONY GATEWAYS" IEICE TRANSACTIONS ON INFORMATION AND SYSTEMS, INSTITUTE OF ELECTRONICS INFORMATION AND COMM. ENG. TOKYO, JP, Bd. E82-D, Nr. 4, April 1999 (1999-04), Seiten 838-845, XP000832566 ISSN: 0916-8532

## Beschreibung

Verfahren zum Steuern einer Datenumsetzung beim Übergang einer Verbindung zwischen einem paketvermittelten und einem leitungsvermittelten Kommunikationsnetz.

In zeitgemäßen Kommunikationssystemen werden Verbindungen zur Übermittlung kontinuierlicher Datenströme, z.B. zur Sprach- oder Videokommunikation, in zunehmendem Maße auch über paketvermittelte Kommunikationsnetze, wie z.B. LANs (Local Area Network), MANs (Metropolitan Area Network) oder WANs (Wide Area Network), geführt. Auf dieser Technik basiert beispielsweise die sogenannte Internettelefonie, die häufig auch als "Voice over Internet Protocol" (VoIP) bezeichnet wird.

Zur Übertragung eines kontinuierlichen Datenstroms über ein paketvermitteltes Kommunikationsnetz wird der Datenstrom in einzelne Datenpakete aufgeteilt, die jeweils mit einer Zieladresse versehen werden und über das paketvermittelte Kommunikationsnetz übertragen werden. Beim Austritt aus dem paketvermittelten Kommunikationsnetz wird aus den Datenpaketen wieder ein kontinuierlicher Datenstrom zusammengesetzt. Da die Datenpakete im paketvermittelten Kommunikationsnetz prinzipiell unabhängig voneinander übertragen werden, treffen die Datenpakete in der Regel nicht in äquidistanten Zeitabständen am Austrittspunkt ein. Zum Ausgleich solcher Laufzeitschwankungen werden die Datenpakete vor dem Zusammensetzen des Datenstroms in einem nach dem Durchlaufprinzip arbeitenden Datenpaket-Pufferspeicher zwischengespeichert, aus dem sie in konstanten Zeitabständen ausgelesen werden. Auf diese Weise kann aus in unregelmäßigen Zeiabständen eintreffenden Daten paketen wieder ein kontinuierlicher Datenstrom rekonstruiert werden. Ein solcher Datenpaket-Pufferspeicher wird häufig auch als Jitter-Puffer bezeichnet. Ein Nachteil eines solchen Jitter-Puffers besteht jedoch darin, dass die Datenübertragung dadurch zusätzlich verzögert wird.

Weiterhin ist bei der Übertragung von Nutzdaten innerhalb von Datenpaketen meist eine höhere Übertragungsbandbreite erforderlich als bei Übertragung dieser Nutzdaten über ein leitungsvermitteltes Netz, da mit jedem Datenpaket ein Datenpaketkopf mit Adress- und Steuerdaten zusätzlich zu übertragen ist. Unter anderem aus diesem Grund wird ein zu übertragender Datenstrom beim Übergang in ein paketvermitteltes Kommunikationsnetz häufig durch Anwendung von Datenkompressionsverfahren komprimiert. Beim Übergang von einem paketvermittelten Kommunikationsnetz in ein leitungsvermittelte Kommunikationsnetz wird der Datenstrom vom Gateway häufig dekomprimiert, da z.B. ISDN-Endgeräte meist keine Dekomprimierung durchführen können. Bei vielen gebräuchlichen Komprimierungsverfahren, wie z.B. gemäß der ITU-T-Empfehlung G.723, tritt allerdings ein Informationsverlust auf.

Sofern die Verbindung zwischen Sender und Empfänger eines Datenstroms über ein einzelnes, durchgängiges paketvermitteltes Kommunikationsnetz führt, sind eine bei der Umsetzung des Datenstroms auftretende Verzögerung oder ein geringfügiger Informationsverlust meist tolerierbar. Häufig findet jedoch, insbesondere bei modernen heterogenen Kommunikationsnetzen, zwischen Sender und Empfänger eines Datenstroms ein mehrfacher Übergang zwischen einem oder mehreren paketvermittelten Kommunikationsnetzen und einem oder mehreren leitungsvermittelten Kommunikationsnetzen statt. Die wiederholte Umsetzung der zu übertragenden Daten an den Übergängen zwischen den Kommunikationsnetzen bedingt jedoch, dass sich die Verzögerungszeiten und die Informationsverluste an den einzelnen Übergängen addieren. Bei einer Übertragung von Sprachdaten führt bereits eine zweimalige Komprimierung und Dekomprimierung der Sprachdaten gemäß der oben genannten G.723-Empfehlung dazu, dass die Sprachausgabe beim Empfänger kaum mehr verständlich ist. Darüber hinaus wird eine große Übertragungsverzögerung bei einer Sprachübertragung von einem Benutzer als sehr negativ empfunden.

Aus der Druckschrift "Voice Service Interworking for PSTN and IP Networks" von M. Handi et al. aus IEEE Communication Magazine, IEEE Service Center, Piscataway, N.J. Band 37, Nr. 5, datient vom Mai 1999, Seiten 104-111 sowie aus der Druckschrift "Media Gateway Control Protocol and Voice over IP Gateways" vom L-P. Anquetil et al. aus Alcatel Communications Review, Brussel, datient vom April 1999, Seiten 151-157 sind Kommunikations verfahren bekannt, bei denen eine Verbindung über mehrere Übergänge zwischen leitungs- und paketvermittelten Kommunikationsnetzen geführt wird.

In keiner der beiden Druchchriften werden jedoch Lösungswege aufgezeigt, wie eine sich mit der Anzahl derartiges Übergange steigernde Beeinträchtigung der Übertragungsqualität vermeiden ließe.

Es ist Aufgabe der vorliegenden Erfindung, ein Verfahren zum Steuern einer Umsetzung von im Rahmen einer Verbindung zu übertragenden Nutzdaten beim Übergang der Verbindung zwischen einem paketvermittelten und einem leitungsvermittelten Kommunikationsnetz anzugeben, durch das sich insbesondere bei mehrfachen Übergängen zwischen paketvermittelten und leitungsvermittelten Kommunikationsnetzen sich steigernde Beeinträchtigungen der Übertragungsqualität vermeiden lassen.

Gelöst wird diese Aufgabe durch ein Verfahren mit den Merkmalen des Patentanspruchs 1.

Vorteilhafte Ausführungsformen der Erfindung sind in den abhängigen Ansprüchen angegeben.

Das erfindungsgemäße Verfahren erlaubt es, eine Umsetzung von im Rahmen einer Verbindung zu übertragenden Nutzdaten beim Übergang zwischen einem paketvermittelten und einem leitungsvermittelten Kommunikationsnetz zu steuern. Die Umsetzung wird durch eine zwischen dem paketvermittelten und dem leitungsvermittelten Kommunikationsnetz angeordnete, erste Gatewayeinrichtung gesteuert. Die Steuerung erfolgt dabei abhängig von einer Übergangsinformation, die von einer auf dem Leitweg der Verbindung befindlichen, und zwischen dem leitungsvermittelten und einem weiteren paketvermittelten Kommunikationsnetz angeordneten, zweiten Gatewayeinrichtung gebildet wird. Die Übergangsinformation ist ein Indikator dafür, dass ein weiterer Übergang der Verbindung zwischen dem leitungsvermittelten und dem weiteren paketvermittelten Kommunikationsnetz stattfindet. Sofern eine solche Übergangsinformation gebildet wurde, kann davon ausgegangen werden, dass die Verbindung, zumindest teilweise, zwischen zwei paketvermittelten Kommunikationsnetzen verläuft. Entsprechend kann bei der Steuerung der Umsetzung durch die erste Gatewayeinrichtung berücksichtigt werden, dass die in einen Datenstrom umzusetzenden Datenpakete spätestens bei der zweiten Gatewayeinrichtung erneut in Datenpakete umgesetzt werden.

Auf diese Weise kann z.B. ein zum Ausgleich von Laufzeitschwankungen an Nutzdatenpaketen vorgesehenes Puffern der Nutzdatenpakete in der ersten Gatewayeinrichtung verhindert werden, falls die Übergangsinformation einen erneuten Übergang der Verbindung in das weitere paketvermittelte Kommunikationsnetz anzeigt. Durch das Verhindern der Pufferung wird die Übertragungsverzögerung minimiert. Die Übertragungsqualität wird dadurch jedoch nicht verringert, da im allgemeinen davon auszugehen ist, dass zwischen dem weiteren paketvermittelten Kommunikationsnetz und dem Verbindungsziel noch eine Pufferung der Datenpakete erfolgt.

Analog dazu kann auch eine Konvertierung der Nutzdaten, z.B. eine Komprimierung oder Dekomprimierung, beim Übergang zwischen dem leitungsvermittelten und dem paketvermittelten Kommunikationsnetz verhindert werden, falls ansonsten davon auszugehen ist, dass die Konvertierung beim Übergang in das weitere paketvermittelte Kommunikationsnetz wieder rückgängig gemacht würde.

Nach einer vorteilhaften Ausführungsform der Erfindung kann die von der zweiten Gatewayeinrichtung gebildete Übergangsinformation entlang des Leitwegs der Verbindung zur ersten Gatewayeinrichtung übermittelt werden, um dort die Umsetzung der Nutzdaten zu beeinflussen. Alternativ dazu kann die Übergangsinformation von der zweiten Gatewayeinrichtung auch zu einer Verbindungssteuerung vermittelt werden, die ein Steuern der Nutzdatenumsetzung in der ersten Gatewayeinrichtung abhängig von der ermittelten Übergangsinformation veranlaßt.

Gemäß der Erfindung wird durch die zweite Gatewayeinrichtung ein Aufbau einer datenpakettransparenten Tunnelverbindung zur ersten Gatewayeinrichtung initiiert, wenn ein Übergang einer Verbindung zwischen dem leitungsvermittelten und dem weiteren paketvermittelten Kommunikationsnetz festgestellt wird. Sobald die Initiierung der Tunnelverbindung von der ersten Gatewayeinrichtung erkannt wird, kann diese Initiierung als solche als Indikator dafür gewertet werden, dass die Verbindung noch durch ein weiteres paketvermitteltes Kommunikationsnetz führt. Die Umsetzung der Nutzdaten kann so abhängig vom Erkennen der Initiierung gesteuert werden. Die Steuersignale zum Aufbau der Tunnelverbindung können dabei gewissermaßen als Übergangsinformation aufgefaßt werden, von der abhängig die Umsetzung gesteuert wird.

Nach einer weiteren vorteilhaften Ausführungsform der Erfindung kann durch die erste Gatewayeinrichtung generell ein Aufbau einer datenpakettransparenten Tunnelverbindung zur zweiten Gatewayeinrichtung initiiert werden. Die Tunnelverbindung kann von der zweiten Gatewayeinrichtung dann akzepiert werden, wenn ein Übergang der Verbindung zwischen dem leitungsvermittelten und dem weiteren paketvermittelten Kommunikationsnetz festgestellt wird. Sobald durch die erste Gatewayeinrichtung erkannt wird, dass die Tunnelverbindung akzeptiert wurde, kann dies als Indikator dafür gewertet werden, dass die Verbindung noch durch ein weiteres paketvermitteltes Kommunikationsnetz führt. Die Umsetzung der Nutzdaten kann so abhängig vom Akzeptieren der Tunnelverbindung gesteuert werden. Die Bestätigungssignale durch die ein Akzeptieren der Tunnelverbindung angezeigt wird, können dabei gewissermaßen als Übergangsinformation aufgefaßt werden, von der abhängig die Umsetzung gesteuert wird. Als datenpakettransparente Tunnelverbindung kann vorzugsweise eine sogenannte PPP-Verbindung (Point to Point Protocol) aufgebaut werden.

Ferner kann von einer auf dem Leitweg der Verbindung zwischen der zweiten Gatewayeinrichtung und einem Verbindungsziel angeordneten Umsetzeinrichtung eine Umsetzinformation über Umsetzeigenschaften der Umsetzeinrichtung gebildet werden. Die Nutzdatenumsetzung kann dann von der ersten Gatewayeinrichtung abhängig von der gebildeten Umsetzinformation gesteuert werden. Falls die Umsetzeinrichtung z.B. zum Komprimieren oder Dekomprimieren von Nutzdaten dient, kann die Umsetzinformation beispielsweise einen Komprimierungsfaktor und/oder ein Komprimierungsverfahren angeben. Falls die Umsetzeinrichtung zum Umsetzen von Datenpaketen in einen kontinuierlichen Datenstrom dient und zu diesem Zweck einen Jitter-Puffer aufweist, kann die Umsetzinformation die Größe des Jitter-Puffers oder die durch den Jitter-Puffer verursachte Übertragungsverzögerung angeben.

Weiterhin kann die Übergangsinformation vorteilhafterweise eine die Verbindung identifizierende Verbindungsinformation umfassen, anhand der die erste Gatewayeinrichtung oder die Verbindungssteuerung ermittelt, für welche Verbindung eine Nutzdatenumsetzung zu steuern ist.

Ausführungsbeispiele der Erfindung werden nachfolgend anhand der Zeichnung näher erläutert.

Dabei zeigen jeweils in schematischer Darstellung
- Figur 1: ein Kommunikationssystem beim Aufbau einer über paketvermittelte und leitungsvermittelte Kommunikationsnetze führenden Verbindung und
- Figur 2: dasselbe Kommunikationssystem mit einer zusätzlichen Verbindungssteuerung.

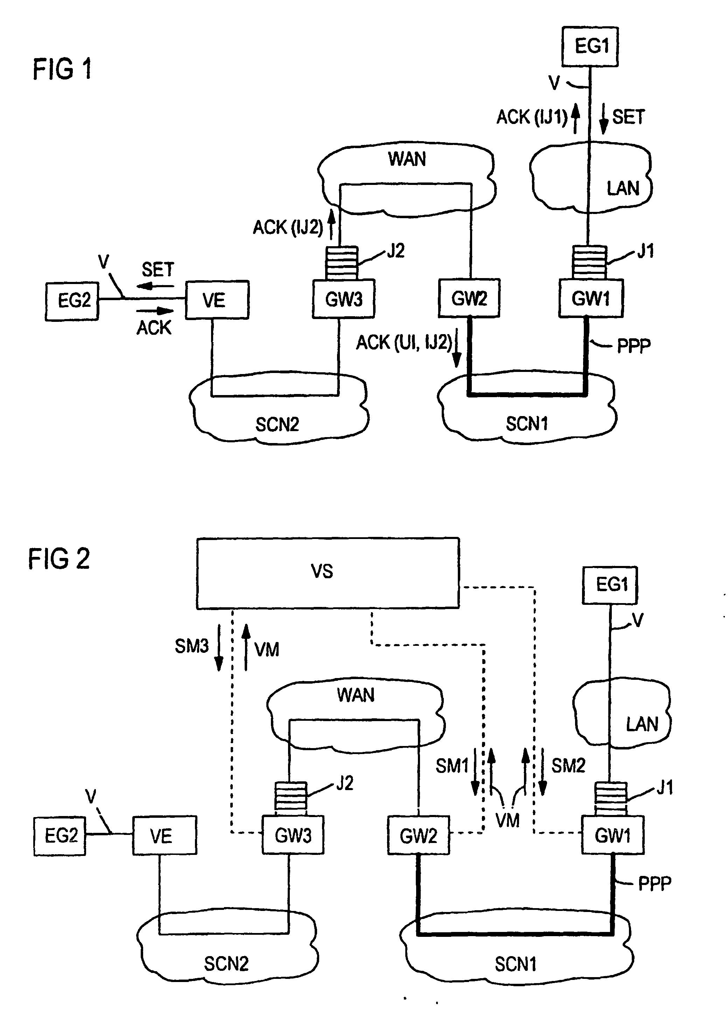

Die Figuren 1 und 2 zeigen jeweils ein Kommunikationssystem beim Aufbau einer über mehrere paketvermittelte Kommunikationsnetze WAN und LAN sowie mehrere leitungsvermittelte Kommunikationsnetze SCN1 und SCN2 führenden Verbindung V in schematischer Darstellung. Der Verbindungspfad der aufzubauenden Verbindung V führt von einem Endgerät EG1 über ein Lokales Netz LAN (Local Area Network) zu einer Gatewayeinrichtung GW1, von dieser über ein leitungsvermitteltes Kommunikationsnetz SCN1 zu einer Gatewayeinrichtung GW2, von dieser über ein Weitverkehrsnetz WAN (Wide Area Network) zu einer Gatewayeinrichtung GW3, von dieser über ein leitungsvermitteltes Kommunikationsnetz SCN2 zu einer Leitungsvermittlungseinrichtung VE und von dieser schließlich zu einem Endgerät EG2. Die leitungsvermittelten Kommunikationsnetze SCN1 und SCN2 können beispielsweise durch sog. SCNs (Switched Circuit Network) mit TDM-Übertragungstechnik (Time Division Multiplex) realisiert sein. Als Weitverkehrsnetz WAN kann z.B. das Internet genutzt werden.

Im Rahmen der Verbindung V, die beispielsweise zur Sprach- und/oder Videokommunikation dienen kann, ist ein kontinuierlicher Datenstrom, z.B. ein Sprachdaten- und/oder Videodatenstrom vom Endgerät EG1 zum Endgerät EG2 zu übermitteln. Aus Gründen der Übersichtlichkeit wird im Folgenden nur ein Verbindungsaufbau und Datentransport in Richtung vom Endgerät EG1 zum Endgerät EG2 betrachtet. Für einen Verbindungsaufbau oder Datentransport in umgekehrter Richtung gelten die nachfolgenden Ausführungen in sinngemäßer Weise.

Die Gatewayeinrichtungen GW1 und GW3 verfügen in Empfangsrichtung zum jeweiligen paketvermittelten Kommunikationsnetz LAN bzw. WAN jeweils über einen Jitter-Puffer J1 bzw. J2 zum Ausgleich von Laufzeitschwankungen empfangener Datenpakete. Die Gatewayeinrichtung GW2 verfügt in Empfangsrichtung zum Weitverkehrsnetz WAN ebenfalls über einen Jitter-Puffer, der jedoch nur für Datenübertragungen in Richtung vom Weitverkehrsnetz WAN zum leitungsvermittelten Kommunikationsnetz SCN1 benötigt wird. Da in den Ausführungsbeispielen nur ein Datentransport in einer Richtung dargestellt wird, ist der Jitter-Puffer der Gatewayeinrichtung GW2 in der Zeichnung nicht dargestellt. Die Jitter-Puffer J1 und J2 sind jeweils als nach dem Durchlaufprinzip arbeitende FIFO-Zwischenspeicher (First in First out) realisiert. In unregelmäßigen Zeitabständen eintreffende Datenpakete werden darin kurzzeitig zwischengespeichert, um in konstanten Zeitabständen wieder ausgelesen zu werden. Die ausgelesenen Datenpakete können so in einen kontinuierlichen Datenstrom zur Übertragung in dem leitungsvermittelten Kommunikationsnetz SCN1 bzw. SCN2 umgesetzt werden.

Anhand von Figur 1 wird nachfolgend ein erstes Ausführungsbeispiel der Erfindung erläutert, bei dem keine zentrale Verbindungssteuerung erforderlich ist.

In Figur 1 wird zum Aufbau der Verbindung V vom Endgerät EG1 eine Verbindungsaufbaumeldung SET über das Lokale Netz LAN, die Gatewayeinrichtung GW1, das leitungsvermittelte Kommunikationsnetz SCN1, die Gatewayeinrichtung GW2, das Weitverkehrsnetz WAN, die Gatewayeinrichtung GW3, das leitungsvermittelte Kommunikationsnetz SCN2 und die Leitungsvermittlungseinrichtung VE zum Verbindungsziel EG2 übermittelt. Als Verbindungsaufbaumeldung SET kann beispielsweise eine sogenannte Setup-Meldung im Rahmen des QSIG-Protokolls gemäß ETSI-Standard oder im Rahmen des DSS1-Protokolls gemäß ITU-T-Empfehlung übermittelt werden. Die Verbindungsaufbaumeldung SET wird vom Zielendgerät EG2 durch eine Bestätigungsmeldung ACK bestätigt, die vom Endgerät EG2 entlang des Verbindungspfades der Verbindung V zum Endgerät EG1 übermittelt wird.

Veranlaßt durch die Initiierung des Verbindungsaufbaus bilden diejenigen auf dem Verbindungspfad befindlichen Gatewayeinrichtungen, bei denen die im Rahmen der Verbindung V zu übermittelnden Nutzdaten von einem paketvermittelten in ein leitungsvermitteltes Kommunikationsnetz übergehen, jeweils eine Pufferinformation über Eigenschaften eines zur Nutzdatenumsetzung vorgesehenen Jitter-Puffers. Die Pufferinformation kann dabei zum Beispiel die Puffergröße oder die durch den betreffenden Jitter-Puffer verursachte Übertragungsverzögerung angeben. Im ersten Ausführungsbeispiel findet ein solcher Übergang nur bei den Gatewayeinrichtungen GW1 und GW3 statt. Hierbei bildet die Gatewayeinrichtung GW3 eine die Größe des Jitter-Puffers J2 angebende Pufferinformation IJ2 und überträgt diese mit der Bestätigungsmeldung ACK zur Gatewayeinrichtung GW1. Analog dazu bildet die Gatewayeinrichtung GW1 eine die Größe des Jitter-Puffers J1 angebende Pufferinformation IJ1 und überträgt diese mit der Bestätigungsmeldung ACK zum Endgerät EG1.

Weiterhin bilden diejenigen auf dem Verbindungspfad befindlichen Gatewayeinrichtungen, bei denen die im Rahmen der Verbindung V zu übermittelnden Nutzdaten von einem leitungsvermittelten in ein paketvermitteltes Kommunikationsnetz übergehen, eine Übergangsinformation UI, um damit andere Gatewayeinrichtungen über diesen Übergang zu informieren. Im ersten Ausführungsbeispiel findet ein solcher Übergang nur bei der Gatewayeinrichtung GW2 statt, so dass die Übergangsinformation UI nur von dieser Gatewayeinrichtung GW2 gebildet wird. Die Gatewayeinrichtung GW2 fügt die Übergangsinformation UI der Bestätigungsmeldung ACK hinzu und überträgt sie auf diese Weise über das leitungsvermittelte Kommunikationsnetz SCN1 zur Gatewayeinrichtung GW1. Die Übergangsinformation UI wird dabei gegebenenfalls von Leitungsvermittlungseinrichtungen (nicht dargestellt) des leitungsvermittelten Kommunikationsnetzes SCN1 transparent weitergeleitet.

Um die Übergangsinformation UI und/oder die Pufferinformationen IJ1, IJ2 in die Bestätigungsmeldung ACK aufzunehmen, kann das der Verbindungsaufbausignalierung zugrunde liegende Signalisierungsprotokoll entsprechend modifiziert werden. Die Verbindungsaufbaumeldung SET oder die Bestätigungsmeldung ACK kann ferner ein Informationselement (nicht dargestellt) enthalten, um damit die Gatewayeinrichtungen GW1, GW2 und GW3 entlang des Verbindungspfades zum Bilden der Übergangsinformation UI und/oder der Pufferinformationen IJ1, IJ2 zu veranlassen. Die Übergangsinformation UI und/oder die Pufferinformationen IJ1, IJ2 können auch mit der Verbindungsaufbaumeldung SET übertragen werden, um bei Aufbau einer bidirektionalen Verbindung eine Umsetzung von Nutzdaten zu steuern, die vom Endgerät EG2 zum Endgerät EG1 übertragen werden.

Die Übergangsinformation UI und/oder die Pufferinformationen IJ1 und IJ2 können z.B. auch mittels einer Teilnehmer-zu-Teilnehmer-Signalisierung oder einer Inband-Signalisierung übermittelt werden. Die Inband-Signalisierung kann dabei innerhalb eines dafür reservierten Zeitschlitzes oder Frequenzbereiches erfolgen oder den zu übertragenden Nutzdaten überlagert werden.

Durch den Empfang der Übergangsinformation UI verfügt die Gatewayeinrichtung GW1 über die Information, dass der Verbindungspfad der Verbindung V zwischen der Gatewayeinrichtung GW1 und dem Verbindungsziel EG2 noch durch mindestens ein paketvermitteltes Kommunikationsnetz, hier das Weitverkehrsnetz WAN, führt. Es kann somit davon ausgegangen werden, dass sich mindestens ein weiterer Jitter-Puffer, hier J2, auf dem Verbindungspfad zwischen der Gatewayeinrichtung GW1 und dem Verbindungsziel EG2 befindet. In der Gatewayeinrichtung GW1 ist weiterhin mit der Pufferinformation IJ2 die Größe des Jitter-Puffers J2 bekannt. Damit kann durch die Gatewayeinrichtung GW1, z.B. durch Vergleich der Größe des eigenen Jitter-Puffers J1 mit der Größe des Jitter-Puffers J2, ermittelt werden, ob der Jitter-Puffer J2 in der Lage ist, auch die im Lokalen Netz LAN auftretenden Laufzeitschwankungen der Datenpakete auszugleichen. Sofern dies zutrifft, wird für die Verbindung V der Jitter-Puffer J1 durch die Gatewayeinrichtung GW1 abgeschaltet; d.h. die im Rahmen der Verbindung V aus dem Lokalen Netz LAN empfangenen Datenpakete werden unter Umgehung des Jitter-Puffers J1 sofort nach Empfang über das leitungsvermittelte Kommunikationsnetz SCN1 zur Gatewayeinrichtung GW2 weitergeleitet.

Zum Übermitteln der Datenpakete zwischen den Gatewayeinrichtungen GW1 und GW2 wird zwischen diesen eine datenpakettransparente Tunnelverbindung PPP, z.B. gemäß dem sogenannten Point-to-Point-Protokoll oder eine sog. IP-over-ATM-Verbindung (Internet Protocol over ATM: IPoA), aufgebaut. Eine solche Tunnelverbindung kann zwischen zwei über ein leitungsvermitteltes Kommunikationsnetz verbundene Gatewayeinrichtungen vorzugsweise dann aufgebaut werden, wenn eine oder beide dieser Gatewayeinrichtungen die Information erhalten, dass die Verbindung über die jeweilige andere Gatewayeinrichtung ebenfalls in ein paketvermitteltes Kommunikationsnetz führt.

Nach einer Variante der Erfindung können diejenigen auf dem Verbindungspfad befindlichen Gatewayeinrichtungen, bei denen die im Rahmen der Verbindung zu übermittelnden Nutzdaten von einem leitungsvermittelten in ein paketvermitteltes Kommunikationsnetz übergehen, hier nur GW2, einen Aufbau einer Tunnelverbindung entgegen der Übertragungsrichtung der Nutzdaten initiieren. Die als Indikator für einen Übergang der Nutzdaten dienende Übergangsinformation UI besteht in diesem Fall aus Signalisierungsmeldungen zum Aufbau der Tunnelverbindung.

Ein zweites Ausführungsbeispiel der Erfindung wird nachfolgend anhand von Figur 2 erläutert.

Figur 2 zeigt das Kommunikationssystem aus Figur 1, ergänzt um eine zusätzliche zentrale Verbindungssteuerung VS in schematischer Darstellung. Einander entsprechende Funktionskomponenten sind in Figur 1 und Figur 2 mit denselben Bezugszeichen bezeichnet.

Die Verbindungssteuerung VS ist mit den Gatewayeinrichtungen GW1, GW2 und GW3 des Kommunikationssystems über logische Signalisierungskanäle verbindbar. Die logischen Signalisierungskanäle sind in Figur 2 durch strichlierte Linien angedeutet. Die Verbindungssteuerung VS verfügt über strukturinformationen über die Struktur des Kommunikationssystems. Im Rahmen des Aufbaus der Verbindung V, die vom Endgerät EG1 über denselben Verbindungspfad wie in Figur 1 zum Endgerät EG2 führt, wird von den auf dem Verbindungspfad befindlichen Gatewayeinrichtungen GW1, GW2 und GW3 jeweils eine Verbindungsanforderungsmeldung VM über einen jeweiligen logischen Signalisierungskanal zur Verbindungssteuerung VS übermittelt. Mit den Verbindungsanforderungsmeldungen VM können vorzugsweise auch die Pufferinformationen IJ1 und IJ2 zur Verbindungssteuerung VS übertragen werden. Nach Übermittlung der Verbindungsanforderungsmeldungen VM kann die Verbindungssteuerung VS mit Hilfe der Strukturinformationen ermitteln, welche Jitter-Puffer auf dem Verbindungspfad der Verbindung V entbehrlich sind und zwischen welchen Gatewayeinrichtungen eine Tunnelverbindung PPP aufzubauen ist. Im vorliegenden, zweiten Ausführungsbeispiel wird durch die Verbindungssteuerung VS erkannt, dass der Jitter-Puffer J1 für die im Rahmen der Verbindung V vom Endgerät EG1 zum Endgerät EG2 zu übertragenden Nutzdaten nicht benötigt wird, da noch ein in Verbindungsrichtung nachfolgender Jitter-Puffer J2 vorhanden ist. Die Verbindungssteuerung VS erkennt weiterhin, dass zwischen den Gatewayeinrichtungen GW1 und GW2 eine datenpakettransparente Tunnelverbindung PPP aufgebaut werden kann. Die Verbindungssteuerung VS übermittelt infolgedessen der Gatewayeinrichtung GW1 eine Steuermeldung SM1, durch die der Jitter-Puffer J1 für die Verbindung V abgeschaltet wird. Ferner wird durch die Verbindungssteuerung VS mittels der Steuermeldung SM1 und einer zur Gatewayeinrichtung GW2 übermittelten Steuermeldung SM2 ein Aufbau der Tunnelverbindung PPP zwischen den Gatewayeinrichtungen GW1 und GW2 veranlaßt. Darüber hinaus übermittelt die Verbindungssteuerung VS zur Gatewayeinrichtung GW3 eine Steuermeldung SM3, die angibt, dass der Verbindungspfad in Richtung zum Zielendgerät EG2 durch kein paketvermitteltes Kommunikationsnetz führt. Infolgedessen wird von der Gatewayeinrichtung GW3 eine üblicherweise beim Übergang einer Verbindung zwischen einem paketvermittelten und einem leitungsvermittelten Kommunikationsnetz vorgesehene Umsetzung der Nutzdaten unverändert beibehalten.

Bei beiden Ausführungsbeispielen kann auch eine beim Übergang zwischen einem leitungsvermittelten und einem paketvermittelten Kommunikationsnetz stattfindende Komprimierung, Dekomprimierung oder sonstige Konvertierung der im Rahmen der Verbindung V zu übertragenden Nutzdaten auf die gleiche Weise wie die Nutzdatenpufferung gesteuert werden. So kann beispielsweise ein Wechsel einer Nutzdatenkodierung in der Gatewayeinrichtung GW1 verhindert werden, wenn anhand der Übergangsinformation UI oder einer Verbindungsanforderungsmeldung VM erkannt wird, dass in der Gatewayeinrichtung GW2 ein erneuter Wechsel zur ursprünglichen Nutzdatencodierung stattfinden würde.

Auf diese Weise kann z.B. bei Sprachübertragungen ein mehrfacher Wechsel der Sprachkodierung, z.B. zwischen der Sprachkodierung gemäß der ITU-T-Empfehlung G.711 und der Sprachkodierung gemäß der ITU-T-Empfehlung G.723, vermieden werden. Da ein Wechsel der Sprachcodierung bei den meisten gebräuchlichen Sprachkodierungsverfahren einen Verlust an Sprachinformation zur Folge hat, würde sich die Qualität der Sprachübertragung bei einem mehrfach aufeinanderfolgenden Wechsel erheblich verschlechtern.

## Patentansprüche

1. Verfahren zum Steuern einer Umsetzung von im Rahmen einer Verbindung (V) zu übertragenden Nutzdaten bei einem ersten Übergang der Verbindung (V) zwischen einem paketvermittelten (LAN) und einem leitungsvermittelten Kommunidationsnetz (SCN1), wobei die Verbindung (V) von dem paketvermittelten Kommunikationsnetz (LAN) über den ersten Übergang in das leitungsvermittelte Kommunikationsnetz (SCN1) und von diesem über einen zweiten übergang in ein weiteres paketvermitteltes Kommunikationsnetz (WAN) verläuft, und wobei der erste übergang über eine erste Gatewayeinrichtung (GW1) und der zweite Übergang über eine zweite Gatewayeinrichtung (GW2) erfolgt,
bei dem
- von der zweiten Gatewayeinrichtung (GW2) eine Übergangsinformation (UI, VM) über den zweiten Übergang der Verdingung (V) gebildet wird,
- die Umsetzung der Nutzdaten durch die erste Gatewayeinrichtung (GW1) abhängig von der gebildeten Übergangsinformation (UI, VM) gesteuert wird,
- beim zweiten Übergang der Verbindung (V) von der zweiten Gatewayeinrichtung (GW2) ein Aufbau einer daten pakettransparenten Tunnelverbindung (PPP) zur ersten Gatewayeinrichtung (GW1) initiiert wird, und
- die Umsetzung der Nutzdaten durch die erste Gatewayeinrichtung (GW1) abhängig vom Erkennen der Initiierung gesteuert wird.
- die Umsetzung der Nutzdaten durch die erste Gatewayeinrichtung (GW1) abhängig vom Ekman der Initiierung gesteuert wird.

2. Verfahren nach Anspruch 1,
**dadurch gekennzeichnet,**
**dass** die Umsetzung der Nutzdaten abhängig von der Übergangsinformation (UI, VM) insofern gesteuert wird, als dass ein zum Ausgleich von Laufzeitschwankungen von Nutzdatenpaketen vorgesehenes Puffern der Nutzdatenpakete in der ersten Gatewayeinrichtung (GW1) verhindert wird.

3. Verfahren nach einem der vorhergehenden Ansprüche,
**dadurch gekennzeichnet,**
**dass** die Umsetzung der Nutzdaten abhängig von der Übergangsinformation (UI, VM) insofern gesteuert wird, als dass eine nicht informationserhaltende Komprimierung der Nutzdaten beim Übergang zwischen dem leitungsvermittelten (SCN1) und dem paketvermittelten Kommunikationsnetz (LAN) verhindert wird.

4. Verfahren nach einem der vorhergehenden Ansprüche,
**dadurch gekennzeichnet,**
**dass** die Übergangsinformation (UI) von der zweiten Gatewayeinrichtung (GW2) entlang des Leitwegs der Verbindung (V) zur ersten Gatewayeinrichtung (GW1) übermittelt wird.

5. Verfahren nach einem der Ansprüche 1 bis 3,
**dadurch gekennzeichnet,**
**dass** die Übergangsinformation (VM) von der zweiten Gatewayeinrichtung (GW2) zu einer Verbindungssteuerung (VS) übermittelt wird, die ein Steuern der Nutzdatenumsetzung abhängig von der übermittelten Übergangsinformation (VM) veranlaßt.

6. Verfahren nach einem der vorhergehenden Ansprüche,
**dadurch gekennzeichnet,**
**dass** durch die erste Gatewayeinrichtung (GW1) ein Aufbau einer datenpakettransparenten Tunnelverbindung (PPP) zur zweiten Gatewayeinrichtung (GW2) initiiert wird, und
**dass** die Umsetzung der Nutzdaten durch die erste Gatewayeinrichtung. (GW1) abhängig davon gesteuert wird, ob die Tunnelverbindung von der zweiten Gatewayeinrichtung (GW2) akzeptiert wird.

7. Verfahren nach einem der vorhergehenden Ansprüche, ,
**dadurch gekennzeichnet,**
**dass** von einer auf dem Leitweg der Verbindung (V) zwischen der zweiten Gatewayeinrichtung (GW2) und einem Verbindungsziel (EG2) angeordneten Umsetzeinrichtung (GW3) eine Umsetzinformation (IJ1, IJ2) über Umsetzeigenschaften der Umsetzeinrichtung (GW3) gebildet wird, und
**dass** die Umsetzung der Nutzdaten durch die erste Gatewayeinrichtung (GW1) abhängig von der gebildeten Umsetzinformation (IJ1, IJ2) gesteuert wird

8. Verfahren nach einem der vorhergehenden Ansprüche,
**dadurch gekennzeichnet,**
**dass** mit der Übergangsinformation (UI, VM) eine die Verbindung (V) identifizierende Verbindungsinformation übermittelt wird, anhand der ermittelt wird, für welche Verbindung eine Nutzdatenumsetzung zu steuern ist.

9. Verfahren nach einem der vorhergehenden Ansprüche,
**dadurch gekennzeichnet,**
**dass** die Übergangsinformation (UI, VM) im Rahmen einer Signalisierungsverbindung (SET, ACK) übermittelt wird.

10. Verfahren nach einem der Ansprüche 1 bis 9,
**dadurch gekennzeichnet,**
**dass** die Übergangsinformation im Rahmen einer Inband-Signalisierung übermittelt wird.

## Claims

1. Method to control a conversion of user data which are to be transmitted via a connection (V) in a first transfer of the connection (V) between a packet-switched (LAN) and a circuit-switched communications network (SCN1), the connection (V) proceeding from the packet-switched communications network (LAN) via the first gateway into the circuit-switched communications network (SCN1) and from the latter via a second gateway into a further packet-switched communications network (WAN), and the first transfer being carried out via a first gateway device (GW1) and the second transfer being carried out via a second gateway device (GW2),
in which
- transfer information (UI, VM) relating to the second transfer of the connection (V) is formed by the second gateway device (GW2),
- the conversion of the user data is controlled by the first gateway device (GW1) depending on the formed transfer information (UI, VM),
- in the second transfer of the connection (V), setup of a data-packet-transparent tunnel connection (PPP) to the first gateway device (GW1) is initiated by the second gateway device (GW2), and
- the conversion of the user data is controlled by the first gateway device (GW1) depending on the recognition of the initiation.

2. Method according to Claim 1,
**characterized in that**
the conversion of the user data is controlled depending on the transfer information (UI, VM) to the extent that a buffer storage of the user data packets which is provided in the first gateway device (GW1) to equalize transit time fluctuations is prevented.

3. Method according to one of the preceding claims,
**characterized in that**
the conversion of the user data is controlled depending on the transfer information (UI, VM) to the extent that a non-information-receiving compression of the user data is prevented in the transfer between the circuit-switched (SCN1) and the packet-switched communications network (LAN).

4. Method according to one of the preceding claims,
**characterized in that**
the transfer information (UI) is transferred from the second gateway device (GW2) along the path of the connection (V) to the first gateway device (GW1).

5. Method according to one of Claims 1 to 3,
**characterized in that**
the transfer information (VM) is transferred from the second gateway device (GW2) to a connection controller (VS) which instigates control of the user data conversion depending on the transfer information (VM) which is transferred.

6. Method according to one of the preceding claims,
**characterized in that**
setup of a data-packet-transparent tunnel connection (PPP) to the second gateway device (GW2) is initiated by the first gateway device (GW1), and
the conversion of the user data is controlled by the first gateway device (GW1) depending on whether the tunnel connection is accepted by the second gateway device (GW2).

7. Method according to one of the preceding claims,
**characterized in that**
conversion information (IJ1, IJ2) relating to conversion characteristics of the conversion device (GW3) is formed by a conversion device (GW3) disposed on the path of the connection (V) between the second gateway device (GW2) and a connection destination (EG2), and
the conversion of the user data is controlled by the first gateway device (GW1) depending on the formed conversion information (IJ1, IJ2).

8. Method according to one of the preceding claims,
**characterized in that**
connection information identifying the connection (V), which is used to determine the connection for which user data conversion is to be controlled, is transferred with the transfer information (UI, VM).

9. Method according to one of the preceding claims,
**characterized in that**
the transfer information (UI, VM) is transferred via a signalling connection (SET, ACK).

10. Method according to one of Claims 1 to 9,
**characterized in that**
the transfer information is transferred using inband signalling.

## Revendications

1. Procédé pour commander une conversion de données utiles à transmettre dans le cadre d'une connexion (V) lors d'une première transition de la connexion (V) entre un réseau à commutation de paquets (LAN) et un réseau à commutation de circuits (SCN1), la connexion (V) passant du réseau à commutation de paquets (LAN) à travers la première transition dans le réseau à commutation de circuits (SCN1) et de celui-ci à travers une deuxième transition dans un autre réseau à commutation de paquets (WAN) et la première transition s'effectuant à travers un premier système de passerelle (GW1) et la deuxième transition à travers un deuxième système de passerelle (GW2),
dans lequel
- le deuxième système de passerelle (GW2) produit une information de transition (UI, VM) sur la deuxième transition de la connexion (V),
- la conversion des données utiles par le premier système de passerelle (GW1) est commandée en fonction de l'information de transition (UI, VM) produite,
- lors de la deuxième transition de la connexion (V), le deuxième système de passerelle (GW2) initie un établissement d'une connexion tunnel (PPP) transparente pour les paquets de données vers le premier système de passerelle (GW1), et
- la conversion des données utiles par le premier système de passerelle (GW1) est commandée en fonction de la détection de l'initiation.

2. Procédé selon la revendication 1,
**caractérisé en ce que**
la conversion des données utiles est commandée en fonction de l'information de transition (UI, VM) dans la mesure où une mise en mémoire tampon des paquets de données utiles prévue pour compenser des variations de temps de transit de paquets de données utiles est empêchée dans le premier système de passerelle (GW1).

3. Procédé selon l'une des revendications précédentes,
**caractérisé en ce que**
la conversion des données utiles est commandée en fonction de l'information de transition (UI, VM) dans la mesure où une compression des données utiles sans conservation de l'information est empêchée lors de la transition entre le réseau à commutation de circuits (SCN1) et le réseau à commutation de paquets (LAN).

4. Procédé selon l'une des revendications précédentes,
**caractérisé en ce que**
l'information de transition (UI) est transmise du deuxième système de passerelle (GW2) sur la voie d'acheminement de la connexion (V) au premier système de passerelle (GW1).

5. Procédé selon l'une des revendications 1 à 3,
**caractérisé en ce que**
l'information de transition (VM) est transmise du deuxième système de passerelle (GW2) à une commande de connexion (VS) qui initie une commande de la conversion des données utiles en fonction de l'information de transition(VM) transmise.

6. Procédé selon l'une des revendications précédentes,
**caractérisé en ce que**
le premier système de passerelle (GW1) initie un établissement d'une connexion tunnel (PPP) transparente pour les paquets de données vers le deuxième système de passerelle (GW2), et
**en ce que** la conversion des données par le premier système de passerelle (GW1) est commandée en fonction de l'acceptation de la connexion tunnel par le deuxième système de passerelle (GW2).

7. Procédé selon l'une des revendications précédentes,
**caractérisé en ce que**
un dispositif de conversion (GW3) placé sur la voie d'acheminement de la connexion (V) entre le deuxième système de passerelle (GW2) et une cible de connexion (EG2) produit une information de conversion (IJ1, IJ2) sur les propriétés de conversion du dispositif de conversion (GW3), et
**en ce que** la conversion des données utiles par le premier système de passerelle (GW1) est commandée en fonction de l'information de conversion (IJ1, IJ2) produite.

8. Procédé selon l'une des revendications précédentes,
**caractérisé en ce que**
avec l'information de transition (UI, VM) est transmise une information de connexion identifiant la connexion (V), à l'aide de laquelle est déterminé pour quelle connexion une conversion des données utiles doit être commandée.

9. Procédé selon l'une des revendications précédentes,
**caractérisé en ce que**
l'information de transition (UI, VM) est transmise dans le cadre d'une connexion de signalisation (SET, ACK).

10. Procédé selon l'une des revendications 1 à 9,
**caractérisé en ce que**
l'information de transition est transmise dans le cadre d'une signalisation dans la bande.
